# EUROPEAN PATENT SPECIFICATION

(11) **EP 4 510 823 B1**
(45) Date of publication and mention of the grant of the patent: **10.06.2026**
(21) Application number: 23722072.8
(22) Date of filing: 17.04.2023
(51) Int. Cl.: A01K 29/00

(54) **ANIMAL HUSBANDRY SYSTEM**
TIERHALTUNGSSYSTEM
SYSTÈME D'ÉLEVAGE

(30) Priority: 19.04.2022 NL 2031623
(43) Date of publication of application: 26.02.2025
(73) Proprietor: Lely Patent N.V., 3147 PB Maassluis (NL)
(72) Inventor: LI, Yan, 3147 PB Maassluis (NL); VAN ADRICHEM, Paulus Jacobus Maria, 3147 PB Maassluis (NL); ANIRAJ, Ananthu, 3147 PB Maassluis (NL); SOZEN, Cagla, 3147 PB Maassluis (NL); VAN DER SLUIS, Joram Robin, 3147 PB Maassluis (NL); VAN VLIET, Sjoerd Timo, 3147 PB Maassluis (NL)
(74) Representative: Octrooibureau Van der Lely N.V.
(86) International application number: PCT/IB2023/053903
(87) International publication number: WO 2023/203459

(56) References cited:
- EP-A1- 3 335 551
- WO-A1-2018/174812

## Description

The present invention relates to an animal husbandry system, wherein a group of animals can move about freely in an area.

Such systems are widely known in the art. Monitoring and tracking the animals in the area and gathering relevant and reliable data plays an important role in such systems.

EP3335551 discloses a method of monitoring livestock inside of a building using cameras and light assemblies arranged above the livestock for gathering tracking data relating to the motion of tracked individual animals. WO2014/118788 relates to an optical monitoring system for livestock in which various activities and parameters are monitored and measured to determine the health state of the population of animals. WO2011/039112 shows an animal behaviour monitoring system in which several animal movement patterns are derived from recorded image data. WO2018/174812 divulges a system and method for identifying an individual animal in a group of animals with identification tags in an area with an identification station. WO2021/083381 discloses a low-cost system for animal identity recognition using animal tracking with images.

The prior art systems and methods have several drawbacks. When multiple cameras are used, an animal moving from the field of view of one camera to the field of view of a next camera has to be matched in the camera images in order to be able to track the animal in question reliably. If this is not done accurately, animals are confounded and the quality of the data gathered is severely affected.

There is a need for an improved system which guarantees a proper matching of animals registered in the fields of view of different cameras.

It is an object of the present invention to provide such an improved system.

The invention achieves the object at least in part by means of a system according to claim 1, in particular an animal husbandry system, wherein a group of animals can move about freely in an area, the system comprising monitoring and analyzing means configured for repeatedly generating images and gathering data therefrom regarding the animals in the area, the monitoring and analyzing means comprising a plurality of cameras provided in such a way that, collectively, they are suitable for monitoring substantially the complete area from above, the monitoring and analyzing means further comprising image processing means, suitable for matching animals which are in the field of view of multiple cameras, the image processing means, to this end, being configured for:
- detecting at least one silhouette of an animal in a first image of a first camera and in a second image of a second camera;
- defining an animal bounding box around each animal silhouette in each image;
- detecting whether each animal in question is standing or lying down;
- applying to each animal bounding box either a first projection onto an image stitching plane in case the animal is standing, or a second projection onto the image stitching plane in case the animal is lying down;
- stitching the projected animal bounding boxes of the first image of the first camera and of the second image of the second camera in the image stitching plane;
- identifying identical animals in the stitched image by comparing the projected animal bounding boxes in the image stitching plane.

In this way, a highly useful and accurate system is realized. The invention is based on the insight that the reliability of the matching or pairing process can be highly increased by taking into account whether the animal in question is standing or lying down. No additional sensors are needed. The quality of the data gathered in the system is improved.

Suitable and advantageous embodiments are described in the dependent claims, as well as in the description below.

According to a first embodiment of the invention, the image processing means are configured for using a floor level of the area as the image stitching plane. This embodiment has proven to give good results.

In a further embodiment, the image processing means are configured for detecting whether each animal in question is standing or lying down by using an object detection model with neural networks, trained to classify standing and lying animals from images. This constitutes a simple, yet efficient solution.

In yet another embodiment, the image processing means are configured for detecting whether each animal in question is standing or lying down by comparing the position of the respective animal bounding box with possible animal positions in an animal lying subarea of the area. This is an alternative solution that works well.

Advantageously, the image processing means are further configured for detecting whether each animal in question is standing or lying down by comparing the orientation of the respective animal bounding box with possible animal orientations in an animal lying subarea of the area. This further improves the reliability of the alternative detection solution.

In accordance with a further embodiment, the image processing means are configured for identifying identical animals in the stitched image by comparing the projected animal bounding boxes in the image stitching plane using a bipartite matching algorithm. In this way, a reliable identification of identical animals is ensured.

The invention will now be further elucidated with reference to the following Figures.

Figure 1 shows an area with an animal husbandry system according to the invention;
Figure 2 illustrates a projection of different objects onto a plane;
Figures 3A and 3B schematically show how two images are combined in order to match animals which are in the field of view of multiple cameras.

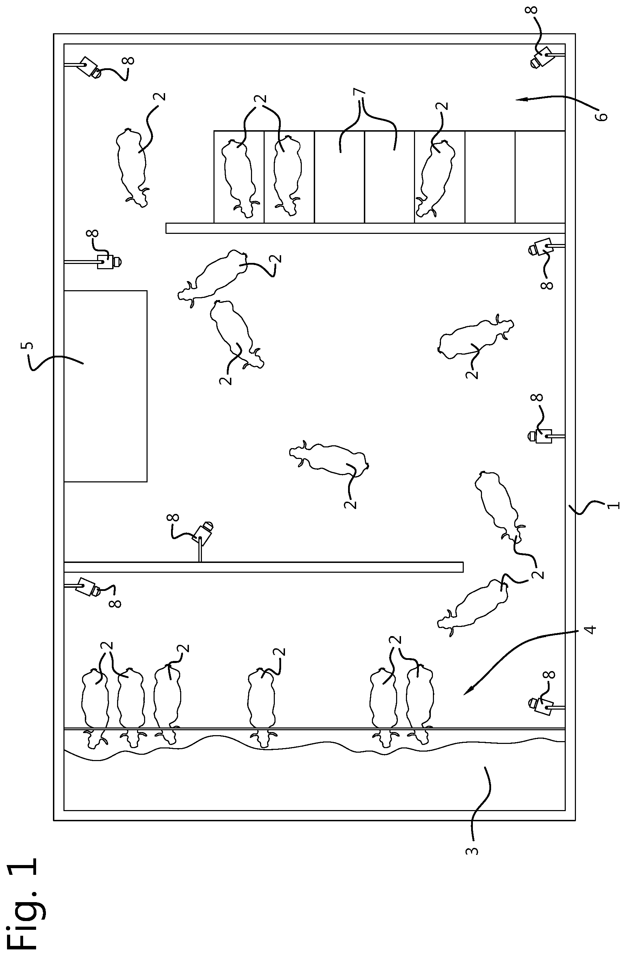

Figure 1 shows an animal husbandry system with an area 1, here shown as a stable or shed or barn 1, wherein a group of animals 2 can move about freely. In the example shown the animals are cows. Of course, the invention can also be applied to an animal husbandry system involving other animals, such as goats, pigs, horses, chickens, turkeys, etcetera. The area 1 can also be a structure with, for example, a partly open roof. The system according to the invention can in principle also be applied in an open area like a meadow or pasture with cattle fences.

The stable 1 has a feed alley 3, a feeding and/or drinking area 4 for the cows 2, a milking robot 5 for the cows 2 and a resting area 6 for the cows 2 with cubicles 7. One or more water troughs (not shown) may be placed in the area 4.

Furthermore, monitoring and analyzing means are provided, here in the form of a number of video cameras 8. Illumination means provided with a number of illumination elements (not shown) are also provided, each illumination element being arranged for illuminating at least a subarea of the area or shed 1. The illumination elements are suitable for illuminating respective different (possibly partly overlapping) regions. Collectively, the illumination elements are suitable for illuminating substantially the whole area or shed 1. The illumination elements may be combined with or integrated in the cameras 8, but they can also be provided separately.

Control means connected to the monitoring and analyzing means are also provided (not shown). The control means may comprise a computer or any other suitable processing means. They can also be located outside or at a distance from the area or shed 1. Image processing means, known as such, can be incorporated in the cameras 8, or in the control means.

Each camera 8 is arranged for monitoring a region or a subarea or a number of subareas of the stable 1. Of course, in principle other optical sensors can also be used, for example infrared cameras and/or time-of-flight cameras. The plurality of cameras 8 is provided in such a way that, collectively, they are suitable for monitoring substantially the complete area 1 from above, particularly the animals 2 and the shed floor. The cameras 8 can be provided in the shed 1 above the animals 2, or as shown in Figure 1, fixedly mounted on the walls of the shed 1. They are positioned and oriented in such a way that all relevant subareas of the area 1 are monitored. The subareas may overlap. In case the invention is used in a pasture, the cameras 8 may be provided on fences, at a sufficient height above the ground. In the example shown, there are eight cameras 8. The chosen configuration obviously depends on the shape of the area or shed 1.

The monitoring and analyzing means 8 are configured for repeatedly generating images and gathering data therefrom regarding the animals 2 in the area 1. The data gathering can be performed with the image processing means in a manner known as such, using image processing techniques. Use can also be made of artificial intelligence techniques (known as such), such as machine learning or deep learning, for example using neural networks.

According to the invention, the monitoring and analyzing means comprising image processing means are suitable for matching or pairing animals 2 which are in the field of view of multiple cameras 8. To this end, the image processing means, are configured for:
- detecting at least one silhouette of an animal 2 in a first image of a first camera 8 and in a second image of a second camera 8;
- defining an animal bounding box around each animal silhouette in each image;
- detecting whether each animal 2 in question is standing or lying down;
- applying to each animal bounding box either a first projection onto an image stitching plane in case the animal 2 is standing, or a second projection onto the image stitching plane in case the animal 2 is lying down;
- stitching the projected animal bounding boxes of the first image of the first camera 8 and of the second image of the second camera 8 in the image stitching plane;
- identifying identical animals 2 in the stitched image by comparing the projected animal bounding boxes in the image stitching plane.

Image stitching is a well-known technique used for combining (video) images taken from neighbouring cameras with overlapping fields of view to produce a wider panorama image. Image stitching works best when the images are stitched on the same 2D plane. The floor of the area 1 can be used as the 2D plane for stitching or combining the images. This embodiment has proven to give good results. Other stitching planes, preferably horizontal, are also possible.

The process of object detection, wherein the location of each animal 2 in the images is found, is done at the height of the cow torso. At that level, a silhouette of each animal 2 in each image is detected and an animal bounding box is defined around each animal silhouette in each image by means of the image processing means. This will be explained in further detail below.

Thus, there is a discrepancy between the height used for image stitching (namely the floor level) and the height used for animal detection (namely the cow torso height). When the same cow 2 is seen from two cameras 8, it is detected at the cow torso height in both images. But the matching or pairing of the detections of the same cow 2 in the image stitching step is done on the floor level. Therefore, an intermediate step is performed to project the animal detections from the cow torso level onto the floor level.

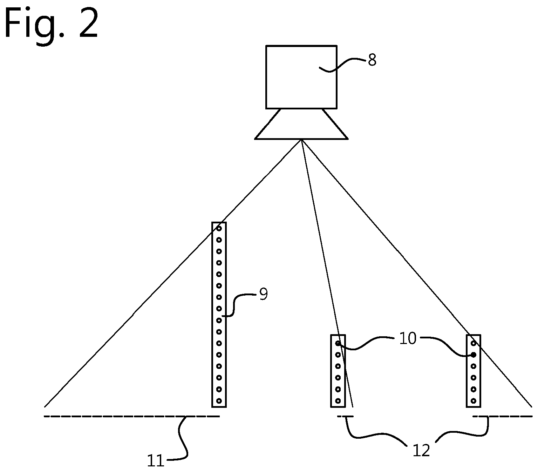

To get accurate projections of detected objects on the floor, different projections are needed for different heights, as a larger pixel displacement correction is needed for detected objects that are higher, see Figure 2.

In Figure 2, camera 8 monitors a high object 9 and 2 low objects 10, illustrated schematically. The projection of the top of high object 9 on the floor results in an undesirably large displacement 11 in the target plane (i.e. the floor). This displacement constitutes a pixel displacement 11 in the projection image. The projection of the top of low objects 10 on the floor results each time in a much smaller pixel displacement 12, even if the object 10 is situated in the peripheral region of the field of view of camera 8. Such pixel displacements can be corrected by the image processing means in a known manner. High objects need a larger pixel displacement correction than low objects, as is clear from Figure 2.

In accordance with the invention, the image processing means are further configured for detecting whether each animal 2 in question is standing or lying down and then either applying to each animal bounding box a first projection (with a large correction) onto the image stitching plane in case the animal 2 is standing, or applying to each animal bounding box a second projection (with a small correction) onto the image stitching plane in case the animal 2 is lying down. In this way, both the higher standing cows 2 and the lower lying cows 2 are accurately projected onto the stitching plane (i.e. the floor), which leads to better matching results.

The image processing means can be configured for detecting whether each animal 2 in question is standing or lying down by using an object detection model with neural networks, trained to classify standing and lying animals 2 from images. This constitutes a simple, yet efficient solution.

The image processing means may also be configured for detecting whether each animal 2 in question is standing or lying down by comparing the position of the respective animal bounding box with possible animal positions in an animal lying subarea of the area, such as the resting area 6. This is an alternative solution that works well. In that case, the image processing means can be further configured for detecting whether each animal 2 in question is standing or lying down by additionally comparing the orientation of the respective animal bounding box with possible animal orientations in an animal lying subarea of the area. If a cow 2 is positioned substantially longitudinally in a cubicle 7 of the resting area 6, then it is highly likely that she is lying down. This further improves the reliability of the alternative detection solution.

To complete the matching or pairing process, the image processing means are further configured for stitching the projected animal bounding boxes of the first image of the first camera 8 and of the second image of the second camera 8 in the image stitching plane, in a manner known as such.

Finally, the image processing means are configured for identifying identical animals 2 in the stitched image by comparing the projected animal bounding boxes in the image stitching plane. This can be done, again, in a manner known as such, for example using a bipartite matching algorithm. In this way, a reliable identification of identical animals is ensured.

Bipartite matching is a standard open-source algorithm that is commonly used for finding an optimal one-to-one matching between two different object lists (or sets) of the same length.

In the present application, the goal is to find cows that are commonly seen by multiple cameras. In such a scenario it is possible that some objects (cows) are uniquely seen (seen by only one camera). The standard bi-partite matching algorithm might not be sufficient in this case of uniquely seen cows, as it always tries to find a one-to-one match between the given two lists. Sparse bipartite matching is essentially a more robust version of the standard bipartite matching algorithm where such cases of objects with no matches are also handled accurately. Therefore, a sparse bipartite matching algorithm is highly suitable here.

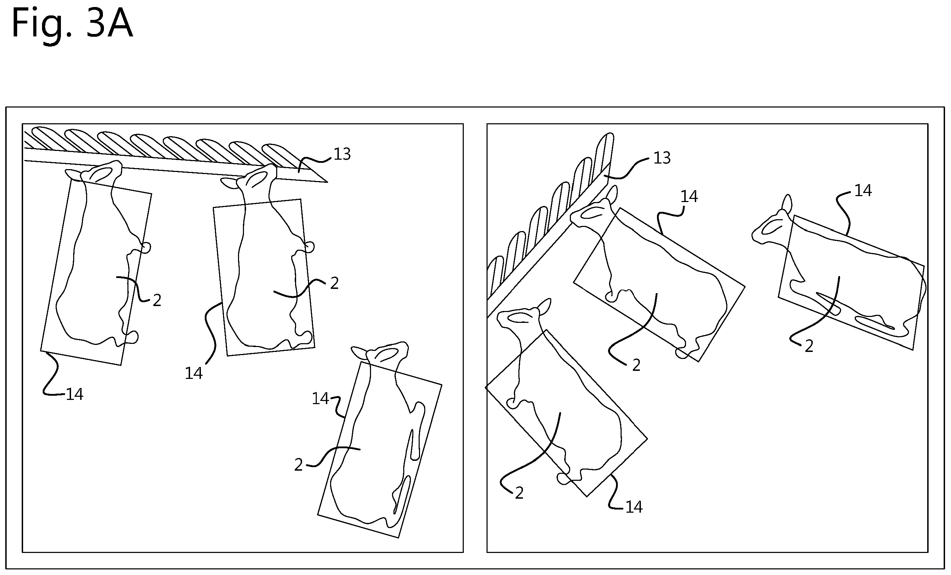

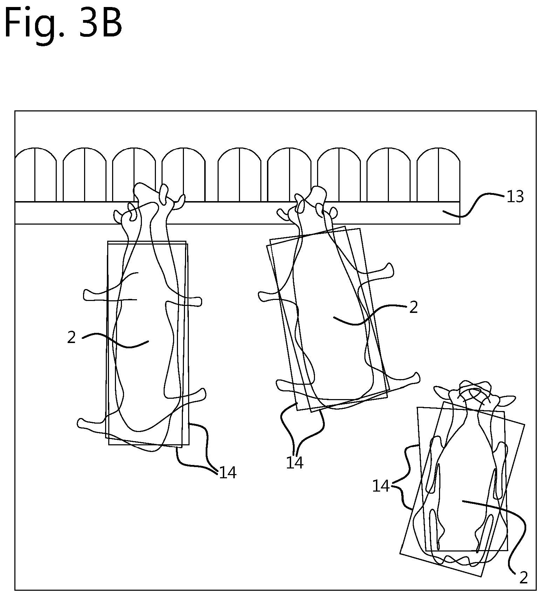

Figures 3A and 3B schematically show how two images are combined in order to match animals which are in the field of view of multiple cameras.

In Figure 3A two images are depicted taken from neighbouring cameras with overlapping fields of view. In this case, the images are video images recorded in the stable 1 showing detected animals along the stitching border (in the middle) where the video images from the two cameras are stitched together to be one video image, using the known image stitching technique.

In the left and right image two cows 2 are shown standing up near a feed fence 13, whilst one cow 2 is lying down at some distance from the feed fence 13. The image processing means have detected the silhouettes of the animals 2 in the first image of a first camera (left) and in the second image of a second camera (right) and have defined an animal bounding box 14 around each animal silhouette in each image.

In accordance with the invention, it is now detected whether each animal 2 in question is standing or lying down, after which to each animal bounding box 14 either the first projection (for the cows 2 standing up) or the second projection (for the cow 2 lying down) onto the image stitching plane is applied.

Figure 3B shows the stitched image containing the combined images of Figure 3A. Due to the projections and to the stitching algorithm some distortions occur in the resulting stitched image. The projected bounding boxes 14 of corresponding cows 2 are overlapping to a large extent, indicating that the animals 2 in the left and right image of Figure 3A are identical. This is determined by the image processing means by comparing the projected animal bounding boxes 14 in the stitched image.

The multi-depth (height-dependent) projection causes the bounding boxes 14 to overlap accurately, which allows for a correct identification of identical cows 2. Tracking of cows 2 across multiple cameras 8 is thus reliably enabled. When an animal 2 moves from the field of view of a first camera 8 into the field of view of a next camera 8, it can be reliably identified as the same animal 2 and thus it can be tracked accurately. In an animal husbandry system it is very useful to be able to track animals 2 in the area 1 accurately. In accordance with the invention, individual animal data can be reliably gathered, although the animals 2 are allowed to move about freely in the area 1.

In comparison, if the height-dependent projections were not used and instead one projection irrespective of the height of the cows 2 would be used, the overlap of the bounding boxes 14 corresponding to the same cows 2 would become significantly less, leading to errors, for example when animals 2 standing close to one another are confounded. This is obviated by the invention, in particular by the differentiation between standing and lying animals.

## Claims

1. An animal husbandry system, wherein a group of animals (2) can move about freely in an area (1), the system comprising monitoring and analyzing means configured for repeatedly generating images and gathering data therefrom regarding the animals (2) in the area (1), the monitoring and analyzing means comprising a plurality of cameras (8) provided in such a way that, collectively, they are suitable for monitoring substantially the complete area (1) from above, the monitoring and analyzing means further comprising image processing means, suitable for matching animals (2) which are in the field of view of multiple cameras (8), the image processing means, to this end, being configured for:
- detecting at least one silhouette of an animal (2) in a first image of a first camera (8) and in a second image of a second camera (8);
- defining an animal bounding box (14) around each animal silhouette in each image;
**characterized in that** the image processing means, to the same end, are further configured for **:**
- detecting whether each animal in question is standing or lying down;
- applying to each animal bounding box (14) either a first projection onto an image stitching plane in case the animal (2) is standing, or a second projection onto the image stitching plane in case the animal (2) is lying down;
- stitching the projected animal bounding boxes (14) of the first image of the first camera (8) and of the second image of the second camera (8) in the image stitching plane;
- identifying identical animals (2) in the stitched image by comparing the projected animal bounding boxes (14) in the image stitching plane.

2. System according to claim 1, wherein the image processing means are configured for using a floor level of the area as the image stitching plane.

3. System according to any one of claims 1 - 2, wherein the image processing means are configured for detecting whether each animal (2) in question is standing or lying down by using an object detection model with neural networks, trained to classify standing and lying animals from images.

4. System according to any one of claims 1 - 2, wherein the image processing means are configured for detecting whether each animal (2) in question is standing or lying down by comparing the position of the respective animal bounding box (14) with possible animal positions in an animal lying subarea (6) of the area (1).

5. System according to claim 4, wherein the image processing means are further configured for detecting whether each animal (2) in question is standing or lying down by comparing the orientation of the respective animal bounding box (14) with possible animal orientations in an animal lying subarea (6) of the area (1).

6. System according to any one of claims 1 - 5, wherein the image processing means are configured for identifying identical animals (2) in the stitched image by comparing the projected animal bounding boxes (14) in the image stitching plane using a bipartite matching algorithm.

## Patentansprüche

1. Tierhaltungssystem, wobei sich eine Gruppe von Tieren (2) in einem Bereich (1) frei bewegen kann, wobei das System Überwachungs- und Analysemittel umfasst, die dazu ausgelegt sind, bezüglich der Tiere (2) in dem Bereich (1) wiederholt Bilder zu erzeugen und Daten daraus zu sammeln, wobei die Überwachungs- und Analysemittel eine Mehrzahl von Kameras (8) umfassen, die so vorgesehen sind, dass sie gemeinsam dazu geeignet sind, im Wesentlichen den gesamten Bereich (1) von oben zu überwachen, wobei die Überwachungs- und Analysemittel ferner Bildverarbeitungsmittel umfassen, die dazu geeignet sind, Tiere (2) zuzuordnen, die sich im Sichtfeld von mehreren Kameras (8) befinden, wobei die Bildverarbeitungsmittel zu diesem Zweck zu Folgendem ausgelegt sind:
- Erkennen mindestens einer Silhouette eines Tieres (2) in einem ersten Bild einer ersten Kamera (8) und in einem zweiten Bild einer zweiten Kamera (8);
- Definieren eines Tierbegrenzungsrahmens (14) um jede Tiersilhouette in jedem Bild;
**dadurch gekennzeichnet, dass** die Bildverarbeitungsmittel zu demselben Zweck ferner zu Folgendem ausgelegt sind:
- Erkennen, ob jedes betreffende Tier steht oder liegt;
- Anwenden auf jeden Tierbegrenzungsrahmen (14) entweder einer ersten Projektion auf eine Bildzusammenfügungsebene, falls das Tier (2) steht, oder einer zweiten Projektion auf die Bildzusammenfügungsebene, falls das Tier (2) liegt;
- Zusammenfügen der projizierten Tierbegrenzungsrahmen (14) des ersten Bildes der ersten Kamera (8) und des zweiten Bildes der zweiten Kamera (8) in der Bildzusammenfügungsebene;
- Identifizieren von identischen Tieren (2) im zusammengefügten Bild durch Vergleichen der projizierten Tierbegrenzungsrahmen (14) in der Bildzusammenfügungsebene.

2. System nach Anspruch 1, wobei die Bildverarbeitungsmittel dazu ausgelegt sind, eine Bodenebene des Bereichs als Bildzusammenfügungsebene zu verwenden.

3. System nach einem der Ansprüche 1-2, wobei die Bildverarbeitungsmittel dazu ausgelegt sind, zu erkennen, ob jedes betreffende Tier (2) steht oder liegt, durch Verwenden eines Objekterkennungsmodells mit neuronalen Netzwerken, das dazu trainiert ist, stehende und liegende Tiere aus Bildern zu klassifizieren.

4. System nach einem der Ansprüche 1-2, wobei die Bildverarbeitungsmittel dazu ausgelegt sind, durch Vergleichen der Position des jeweiligen Tierbegrenzungsrahmens (14) mit möglichen Tierpositionen in einem Tierliegeteilbereich (6) des Bereichs (1) zu erkennen, ob jedes betreffende Tier (2) steht oder liegt.

5. System nach Anspruch 4, wobei die Bildverarbeitungsmittel ferner dazu ausgelegt sind, durch Vergleichen der Orientierung des jeweiligen Tierbegrenzungsrahmens (14) mit möglichen Tierorientierungen in einem Tierliegeteilbereich (6) des Bereichs (1) zu erkennen, ob jedes betreffende Tier (2) steht oder liegt.

6. System nach einem der Ansprüche 1 bis 5, wobei die Bildverarbeitungsmittel dazu ausgelegt sind, identische Tiere (2) in dem zusammengefügten Bild durch Vergleichen der projizierten Tierbegrenzungsrahmen (14) in der Bildzusammenfügungsebene unter Verwendung eines zweiteiligen Zuordnungsalgorithmus zu identifizieren.

## Revendications

1. Système d'élevage d'animaux, dans lequel un groupe d'animaux (2) peut se déplacer librement dans une zone (1), le système comprenant des moyens de surveillance et d'analyse configurés pour générer de manière répétée des images et recueillir des données à partir de celles-ci concernant les animaux (2) dans la zone (1), les moyens de surveillance et d'analyse comprenant une pluralité de caméras (8) prévues de telle sorte que, collectivement, elles sont adaptées pour surveiller sensiblement la zone (1) tout entière depuis le dessus, les moyens de contrôle et d'analyse comprenant en outre des moyens de traitement d'image, adaptés pour mettre en correspondance des animaux (2) qui sont dans le champ de vision de multiples caméras (8), les moyens de traitement d'image étant à cet effet configurés pour :
- détecter au moins une silhouette d'un animal (2) dans une première image d'une première caméra (8) et dans une deuxième image d'une deuxième caméra (8) ;
- définir un rectangle de délimitation d'animal (14) autour de chaque silhouette d'animal dans chaque image ;
**caractérisé en ce que** les moyens de traitement d'image, dans le même but, sont en outre configurés pour :
- détecter si chaque animal en question est debout ou couché ;
- appliquer à chaque rectangle de délimitation d'animal (14) soit une première projection sur un plan de raccord d'image dans le cas où l'animal (2) est debout, soit une deuxième projection sur le plan de raccord d'image dans le cas où l'animal (2) est couché ;
- raccorder les rectangles de délimitation d'animal projetés (14) de la première image de la première caméra (8) et de la deuxième image de la deuxième caméra (8) dans le plan de raccord d'image ;
- identifier des animaux identiques (2) dans l'image raccordée en comparant les rectangles de délimitation d'animal projetés (14) dans le plan de raccord d'image.

2. Système selon la revendication 1, dans lequel les moyens de traitement d'image sont configurés pour utiliser un niveau de sol de la zone comme plan de raccord d'image.

3. Système selon l'une quelconque des revendications 1 à 2, dans lequel les moyens de traitement d'image sont configurés pour détecter si chaque animal (2) en question est debout ou couché en utilisant un modèle de détection d'objet avec réseaux neuronaux, entraîné pour classer des animaux debout et couchés à partir d'images.

4. Système selon l'une quelconque des revendications 1 à 2, dans lequel les moyens de traitement d'image sont configurés pour détecter si chaque animal (2) en question est debout ou couché en comparant la position du rectangle de délimitation d'animal respectif (14) avec des positions possibles d'animal dans une sous-zone (6) d'animaux couchés de la zone (1).

5. Système selon la revendication 4, dans lequel les moyens de traitement d'image sont en outre configurés pour détecter si chaque animal (2) en question est debout ou couché en comparant l'orientation du rectangle de délimitation d'animal respectif (14) avec des orientations possibles d'animal dans une sous-zone (6) d'animaux couchés de la zone (1).

6. Système selon l'une quelconque des revendications 1 à 5, dans lequel les moyens de traitement d'image sont configurés pour identifier des animaux identiques (2) dans l'image raccordée en comparant les rectangles de délimitation d'animal projetés (14) dans le plan de raccord d'image à l'aide d'un algorithme d'appariement biparti.
